**Europäisches Patentamt**

**European Patent Office**

**Office européen des brevets**

(11) Veröffentlichungsnummer: **0 295 670 B1**

(12) # EUROPÄISCHE PATENTSCHRIFT

(45) Veröffentlichungstag der Patentschrift:
22.05.91 Patentblatt 91/21

(51) Int. Cl.⁵: **B23Q 3/157**

(21) Anmeldenummer: **88109593.9**

(22) Anmeldetag: **16.06.88**

(54) **Werkzeugwechselvorrichtung für eine Vielspindelwerkzeugmaschine.**

(30) Priorität: **16.06.87 DE 3720066**

(43) Veröffentlichungstag der Anmeldung:
**21.12.88 Patentblatt 88/51**

(45) Bekanntmachung des Hinweises auf die
Patenterteilung:
**22.05.91 Patentblatt 91/21**

(84) Benannte Vertragsstaaten:
**AT DE FR GB IT SE**

(56) Entgegenhaltungen:
**DE-A- 2 251 012**
**DE-A- 2 608 141**
**DE-A- 2 632 311**
**DE-A- 3 235 319**
**US-A- 3 566 516**

(73) Patentinhaber: **Gebr. Heller Maschinenfabrik
GmbH
Postfach 1428 Neuffener Strasse 54
W-7440 Nürtingen (DE)**

(72) Erfinder: **Der Erfinder hat auf seine Nennung
verzichtet**

(74) Vertreter: **Jackisch-Kohl, Anna-Katharina et al
Patentanwälte Jackisch-Kohl & Kohl
Stuttgarter Strasse 115
W-7000 Stuttgart 30 (DE)**

EP 0 295 670 B1

## Beschreibung

Die Erfindung betrifft eine Werkzeugwechselvorrichtung für eine Vielspindelwerkzeugmaschine nach dem Oberbegriff des Anspruches 1.

Bei dieser bekannten Werkzeugwechselvorrichtung (DE-A-17 52 463) sind die Werkzeuge in einen Werkzeugträger gesteckt, deren Schäfte in Aufnahmen der Spindeln gesteckt und über Verzahnungen drehfest mit ihnen verbunden werden. Die Einspannung der Werkzeugträger erfolgt über Kolben-Zylinder-Einheiten der Vorrichtung und über den mit den Kolbenstangen zu verbindenden plattenförmigen Träger. Im Träger sind die Werkzeugträger gelagert und geführt. Für die Führung der Werkzeugträger sind im Träger Lager vorgesehen, in denen die Werkzeugträger drehbar gelagert sind. Sie sind außerdem über Druckfedern in Achsrichtung federnd verspannt. Die Werkzeugträger sind darum in den Spindeln nicht verriegelt. Bei entsprechend hohen Drehmomenten oder bei entsprechend ausgebildeten Werkzeugen besteht darum die Gefahr, daß die Werkzeugträger über die Verzahnungen aus ihrer Kupplungsstellung herausklettern.

Bei einer anderen bekannten Werkzeugwechselvorrichtung (DE-A-32 42 439) ist der Träger an einer Schwenkeinrichtung befestigt, mit der er aus einer Bestückungsstellung über eine Spindeleinheit der Maschine hinweg in eine Wechselstellung vor den Spindeln schwenkbar ist. Der Träger hat zwei Reihen von Aufnahmen, von denen die eine Reihe von Öffnungen zur Aufnahme der zu entfernenden Werkzeuge und die andere Reihe von Öffnung für die einzuwechselnden Werkzeuge vorgesehen ist. Zum Wechseln der Werkzeuge auf den Spindeln wird der Träger mit den in die eine Öffnungsreihe eingesetzten Werkzeugen vor die Spindeln in eine erste Lage derart geschwenkt, daß durch Vorfahren der Spindeleinheit die auszuwechselnden Werkzeuge in die nicht besetzten Öffnungen des Trägers gelangen. Nach Lösen der Spanneinrichtungen muß die Spindeleinheit zurückgefahren, der Träger in eine zweite Stellung geschwenkt und anschließend die Spindeleinheit wieder in Richtung auf den Träger gefahren werden. Hierbei gelangen die einzuwechselnden Werkzeuge in die Spanneinrichtungen der Spindeln und werden dort eingespannt. Anschließend muß die Spindeleinheit zurückgefahren werden, damit die Werkzeuge aus den Öffnungen des Trägers herausgezogen werden können. Anschließend erst kann der Träger mit den ausgewechselten Werkzeugen zurück in seine Bestückungsstellung geschwenkt werden. Dieser Werkzeugwechsel benötigt erhebliche Zeit, weil die Spindeleinheit mehrmals hin- und hergefahren werden muß, damit die auszuwechselnden Werkzeuge in den Träger eingesetzt und die einzuwechselnden Werkzeuge aus dem Träger herausgezogen werden können. Vielspindelwerkzeugmaschinen befinden sich üblicherweise innerhalb einer Bearbeitungsstraße. Die langen Wechselzeiten bei der bekannten Wechseleinrichtung bedingen darum erhebliche Ausfallzeiten, weil während des Wechselvorganges die gesamte Anlage stillsteht. Zudem ist die Schwenkeinrichtung für den Träger aufwendig, weil die zwei unterschiedlichen Wechsellagen des Trägers eine entsprechende konstruktive Ausbildung und auch Steuerung der Schwenkeinrichtung erfordern. Zudem muß der Durchmesser der Werkzeuge kleiner sein als der Durchmesser der Werkzeugaufnahme im Träger, damit er über die Werkzeuge hinweg abgezogen werden kann.

Der Erfindung liegt die Aufgabe zugrunde, die gattungsgemäße Werkzeugwechselvorrichtung so auszubilden, daß die Werkzeuge in konstruktiv einfacher Weise derart ein- und ausgewechselt werden können, daß die Werkzeuge in der Arbeitsstellung absolut fest und axial unbeweglich mit den Spindeln verbunden sind.

Diese Aufgabe wird bei der gattungsgemäßen Werkzeugwechselvorrichtung erfindungsgemäß mit den kennzeichnenden Merkmalen des Anspruches 1 gelöst.

Bei der erfindungsgemäßen Werkzeugwechselvorrichtung sind die Spanneinrichtungen unmittelbar an den Spindeln vorgesehen. Die Werkzeuge werden in die Spanneinrichtungen eingespannt, so daß sie absolut fest und axial unbeweglich mit den Spindeln verbunden sind. Es besteht darum nicht die Gefahr, daß die Werkzeuge während des Bearbeitungsvorganges von den Spindeln freikommen. Vielmehr werden die Werkzeuge zuverlässig von den Spindeln drehbar angetrieben. Obwohl eine entsprechend der Zahl der Spindeln vorgesehene Zahl von Spanneinrichtungen vorhanden ist, lassen sich sämtliche Spanneinrichtungen einfach durch das gemeinsame Entriegelungsglied betätigen. Es läßt sich in eine die Verriegelungselemente der Spanneinrichtungen freigebende Lage verstellen. Dabei werden die Verriegelungselemente in ihre Verriegelungsstellung zurückgeführt. Im Träger sind die Werkzeuge dann berührungslos angeordnet, so daß sie während des Arbeitsvorganges den Träger nicht berühren. Er muß darum auch keine Führungen und Lager für die Werkzeuge aufweisen und kann darum konstruktiv sehr einfach ausgebildet sein.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1 teilweise in Seitenansicht und teilweise im Schnitt eine erfindungsgemäße Werkzeugwechseleinrichtung,

Fig. 2 eine Ansicht in Richtung des Pfeiles II in Fig. 1,

Fig. 3 eine Ansicht längs der Linie III-III in Fig. 1.

Mit der Werkzeugwechseleinrichtung ist es möglich, gleichzeitig mehrere Werkzeuge, beispielsweise Bohr-, Senk-, Gewindeschneid- oder Ausdrehwerkzeuge, automatisch von einer Vielspindelwerkzeugmaschine abzunehmen und in diese Maschine einzusetzen.

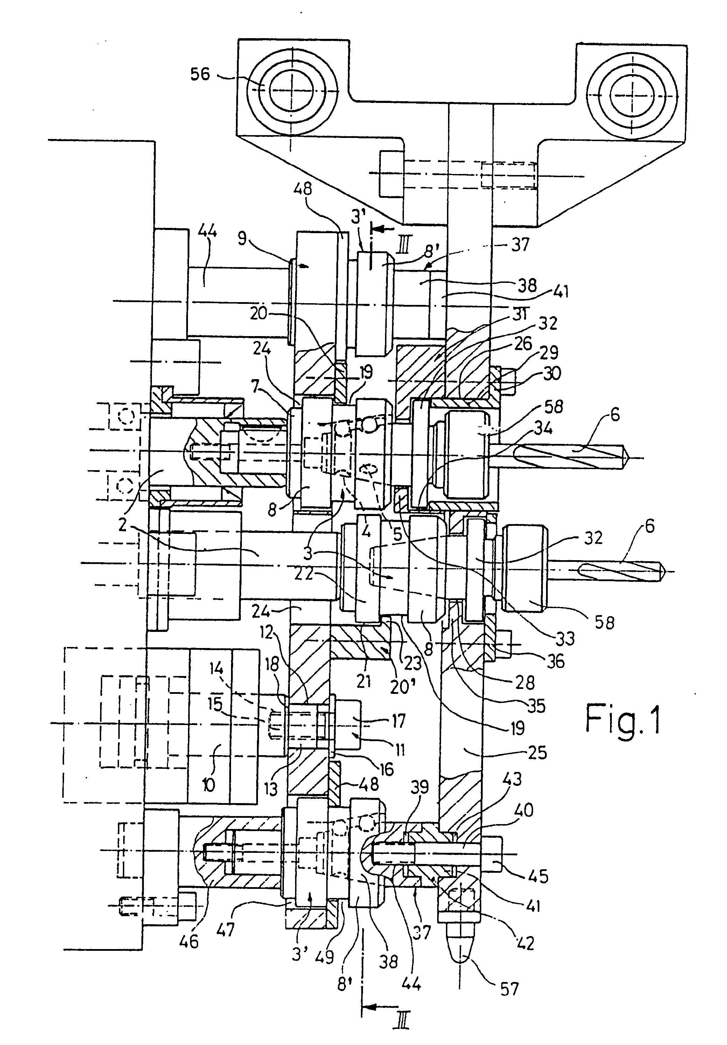

Die Vielspindelwerkzeugmaschine 1 ist in Fig. 1 nur schematisch und teilweise dargestellt. Sie hat wenigstens zwei, im Ausführungsbeispiel drei Arbeitsspindeln 2, die in bekannter Weise mit Schnellwechselspanneinrichtungen 3 (z.B. Bilz-Schnellwechselfutter SBK) versehen sind. Sie haben eine kegelförmige Aufnahme 4, in die ein Schaft 5 von Werkzeugen 6 in bekannter Weise eingesetzt wird. Die Schnellwechselspanneinrichtung 3 hat einen auf einem Futterkörper 7 begrenzt verschiebbaren Verriegelungsring 8, der gegen die Kraft einer (nicht dargestellten) Druckfeder aus einer Verriegelungsstellung in eine Freigabestellung verschiebbar ist. Im Futterkörper 7 sind in bekannter Weise zwei axial mit Abstand benachbarte Kugelsätze gelagert, die teilweise radial nach innen in die kegelförmige Aufnahme 4 ragen. Der Werkzeugschaft 5 ist mit entsprechenden Vertiefungen versehen, in welche die Kugeln der beiden Kugelsätze eingreifen können. Der hülsenförmige Verriegelungsring 8 ist so ausgebildet, daß er in seiner gegen die Kraft der Druckfeder zurückgeschobenen Freigabestellung die Kugeln freigibt, so daß sie beim Herausziehen oder Einsetzen des Schaftes 5 in die kegelförmige Aufnahme radial nach außen verschoben werden können. Wenn der Verriegelungsring 8 unter der Kraft der Druckfeder wieder in seine Verriegelungsstellung verschoben wird, werden die Kugeln durch an der Innenseite des Verriegelungsringes vorgesehene Nocken oder dgl. derart radial nach innen gedrückt, daß sie in die Vertiefungen des Schaftes 5 eingreifen und in dieser Eingriffslage gehalten werden. Auf diese Weise sind die Werkzeuge 6 axial unverschiebbar und drehfest mit der jeweiligen Arbeitsspindel 2 verbunden.

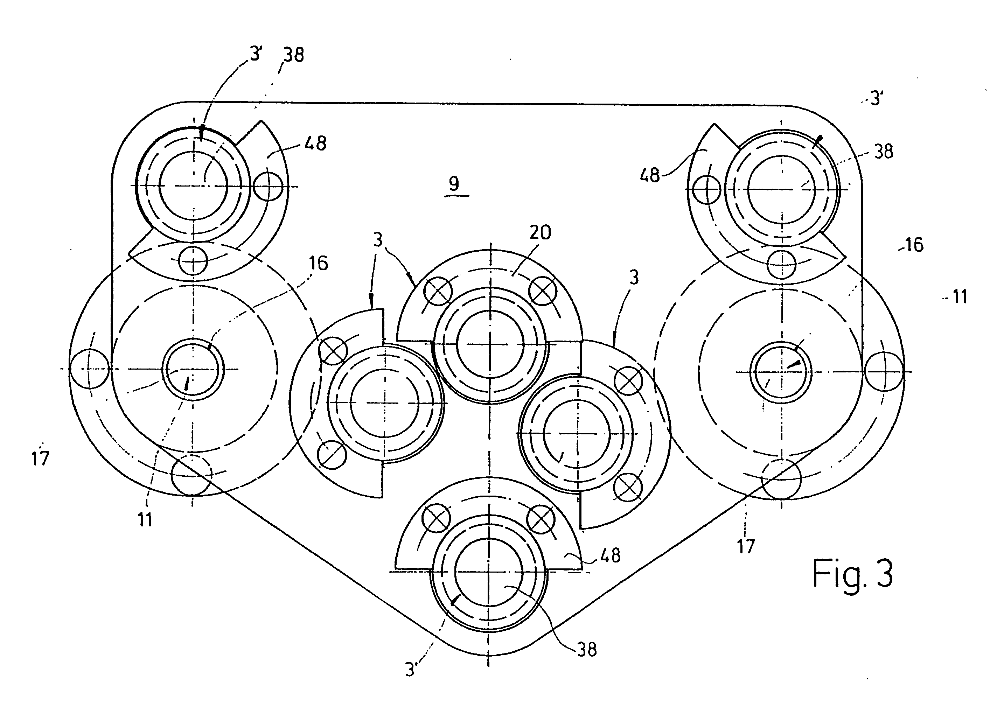

Die Verriegelungsringe 8 sämtlicher Schnellwechselspanneinrichtungen 3 werden bei der Werkzeugwechseleinrichtung gleichzeitig betätigt. Als Betätigungsglied 9 dient eine Entriegelungsplatte, die axial in bezug auf die Arbeitsspindel 2 verschoben werden kann. Zum Verschieben der Entriegelungsplatte 9 sind wenigstens zwei Kolben-Zylinder-Einheiten 10 vorgesehen, die an der Vielspindelwerkzeugmaschine 1 angeordnet sind. Die Kolbenstangen 11 (Fig. 1 und 3) durchsetzen Öffnungen 12 in der Entriegelungsplatte 9 und sind formschlüssig mit ihr verbunden. Wie Fig. 1 zeigt, hat die Kolbenstange 11 ein im Außendurchmesser abgesetztes Endteil 13 mit einer Gewindebohrung 14, in die ein Gewindezapfen 15 eines mit einem Radialbund 16 versehenen Endstückes 17 geschraubt wird. Die Entriegelungsplatte 9 liegt somit zwischen einer Schulter 18 der Kolbenstange 11 und dem Bund 16. Infolge des lösbaren Endstückes 17 kann die Entriegelungsplatte 9 bei Bedarf einfach ausgewechselt werden. Zum Axialverschieben der Entriegelungsplatte 9 werden die Kolbenstangen 11 der vorzugsweise hydraulisch arbeitenden Kolben-Zylinder-Einheiten 10 aus- und eingefahren. Die Entriegelungsplatte 9 nimmt dabei die Verriegelungsringe 8 der Schnellwechselspanneinrichtungen 3 gleichzeitig mit.

Um die Verriegelungsringe 8 mitnehmen zu können, sind sie mit der Entriegelungsplatte 9 formschlüssig verbunden. Diese Formschlußverbindungen können unterschiedlich ausgestaltet sein, wie Fig. 1 zeigt. Die Verriegelungsringe 8 sind jeweils mit einer umlaufenden Ringnut 19 versehen, in welche jeweils ein an der Entriegelungsplatte 9 vorgesehenes Formschlußglied 20 bzw. 20′ eingreift. Der Formschlußteil 20 ist teilkreisförmig ausgebildet (Fig. 3), vorzugsweise halbkreisförmig, so daß er den Verriegelungsring 8 über den halben Umfang umgibt. Dadurch ist eine zuverlässige Mitnahme des Verriegelungsringes beim Verschieben der Entriegelungsplatte 9 gewährleistet. Das Formschlußglied 20 ist auf der von der Maschine 1 abgewandten Außenseite der Entriegelungsplatte 9 lösbar befestigt, so daß das Formschlußglied bei Bedarf einfach abgenommen und beipielsweise ausgetauscht werden kann. Sämtliche Formschlußglieder für die Verriegelungsringe 8 können in dieser Weise ausgebildet sein. Im Ausführungsbeispiel ist das Formschlußglied 20′ wesentlich dicker als das Formschlußglied 20. Dies ist notwendig, weil die zugehörigen Schnellwechselspanneinrichtung 3 gegenüber der Schnelwechselspanneinrichtung mit dem Formschlußglied 20 axial versetzt angeordnet ist (Fig. 1). Das Formschlußglied 20′ erstreckt sich ebenfalls vorzugsweise teilkreisförmig und hat eine Nut 21, in die ein Bund 22 des Verriegelungsringes 8 eingreift. In die Ringnut 19 des Verriegelungsringes 8 selbst greift ein die Nut 21 nach außen begrenzendes Randstück 23 des Formschlußgliedes 20′ ein.

Wesentlich ist, daß die Verriegelungsringe 8 der Schnellspannwechseleinrichtungen 3 axial und radial mit Spiel gegenüber der Entriegelungsplatte 9 und den Formschlußgliedern 20, 20′ angeordnet sind, so daß die Verriegelungsringe beim Arbeiten mit den Werkzeugen 6 ungehindert drehen können. Soweit die Verriegelungsringe 8 in entsprechende Durchgangsöffnungen 24 der Entriegelungsplatte 9 ragen, ist deren Durchmesser größer als der Durchmesser der Verriegelungsringe. Da die dem Formschlußglied 20′ zugeordnete Schnellwechselspanneinrichtung 3 radial nach außen versetzt angeordnet ist, ragt in die Durchgangsöffnung 24 die Arbeitsspindel 2.

Auch das Formschlußglied 20′ ist lösbar auf der von der Maschine 1 abgewandten Außenseite der Entriegelungsplatte 9 befestigt, so daß es jederzeit bequem demontiert werden kann.

Die Entriegelungsplatte 9 selbst sitzt spielfrei auf den Kolbenstangen 11 der Kolben-Zylinder-Einheiten 10, so daß die Entriegelungsplatte einwandfrei verschoben werden kann.

Die in die Schnellwechselspanneinrichtungen 3 einzuwechselnden Werkzeuge 6 sind in einem Träger 25 gehalten, der als Platte ausgebildet ist. Er ist mit Ausnehmungen 26 bis 28 versehen, durch welche die Schnellwechselspanneinrichtungen 3 bzw. die Werkzeuge 6 ragen. Die Ausnehmungen 26 bis 28 können gleich ausgebildet sein ; im Ausführungsbeispiel haben sie jedoch unterschiedliche Form, weil die Werkzeuge bzw. die Schnelwechselspanneinrichtungen 3 in Axialrichtung in unterschiedlichen Lagen angeordnet sind.

Die Ausnehmung 26 ist zylindrisch ausgebildet und nimmt eine Aufnahmehülse 29 auf, die an einem Ende mit einem radial nach außen gerichteten Flansch 30 versehen ist, der an der von der Entriegelungsplatte 9 abgewandten Außenseite des Trägers 25 mit Schrauben lösbar befestigt ist. Das entsprechende Werkzeug 6 ragt durch die Aufnahmehülse 29 und wird zwischen ihr und einem Halteteil 31, der auf der der Entriegelungsplatte 9 zugewandten Seite des Trägers 25 befestigt ist, axial am Träger gehalten. Das Werkzeug 6 ist in bekannter Weise mit einem Ringbund 32 versehen, der zwischen der Aufnahmehülse 29 und dem Halteteil 31 liegt. Der Halteteil 31 schließt an das in Richtung auf die Entriegelungsplatte 9 über den Träger 25 ragende Endteil der Aufnahmehülse 29 an und ist mit Abstand von der Stirnseite der Aufnahmehülse mit einem in Richtung auf den kegelförmigen Schaft 5 Werkzeuges vorstehenden Sicherungsteil 33 versehen. Er hat eine Öffnung 34, durch die der Schaft 5 mit Spiel ragt. Der Ringbund 32 liegt in der eingespannten Lage des Werkzeuges 6 (Fig. 1) ebenfalls mit radialem und mit axialem Spiel zwischen dem Sicherungsteil 33 und der Aufnahmehülse 29, wie aus Fig. 1 deutlich erkennbar ist.

An den übrigen Ausnehmungen 27 und 28 des Trägers 25 können ebenfalls Aufnahmehülsen und Halteteile vorgesehen sein, wenn die am Träger zu halternden Werkzeuge in gleicher Weise angeordnet sind. Im dargestellten Ausführungsbeispiel ist jedoch wenigstens das in Fig. 1 untere Werkzeug 6 axial versetzt in bezug auf das obere Werkzeug angeordnet. Aus diesem Grunde ist dieses Werkzeug in anderer Weise axial und radial gesichert am Träger 25 gehalten. Die Ausnehmung 28 für dieses Werkzeug 6 ist mit einem radial nach innen ragenden umlaufenden Steg 35 versehen, der vorzugsweise einstückig mit dem Träger 25 ausgebildet ist. Der Steg greift in den Bereich zwischen dem Verriegelungsring 8 und dem Ringbund 32 des Werkzeuges 6 ein. Auf der von der Entriegelungsplatte 9 abgewandten Seite des Trägers 25 ist ein teilkreisförmig ausgebildetes Sicherungsglied 36 befestigt, das, in Achsrichtung der Ausnehmung 28 gesehen, in die Ausnehmung ragt. Der Ringbund 32 des Werkzeuges 6 liegt innerhalb der Ausnehmung 28 axial zwischen dem Steg 35 und dem Sicherungsglied 36. Das Werkzeug 6 ist dadurch gegen Herausfallen aus der Ausnehmung 28 einwandfrei gesichert. Wie Fig. 1 zeigt, ist das Werkzeug 6 außerdem in der Ausnehmung 28 auch radial mit Spiel angeordnet.

Die Ausnehmung 27 des Trägers 25 kann wie die Ausnehmung 26 oder die Ausnehmung 28 ausgebildet sein, je nach Anordnung und Lage des entsprechenden Werkzeuges.

Die Werkzeuge sind in der Arbeitslage gemäß Fig. 1 auf jeden Fall in den Ausnehmungen 26 bis 28 bzw. in den Aufnahmehülsen 29 radial mit Spiel gelagert. Auch die Axialsicherung für die Werkzeuge ist so vorgesehen, daß die Werkzeuge in der Arbeitslage axiales Spiel haben. Dadurch ist sichergestellt, daß die Werkzeuge auf jeden Fall ungehindert drehen können. Außerdem ist das Spiel für die Werkzeuge 6 so gewählt, daß beim Einsetzen der Werkzeuge in die entsprechenden Schnellwechselspanneinrichtungen 3 eine selbsttätige Ausrichtung der Werkzeuge stattfinden kann, so daß der Wechselvorgang problemlos durchgeführt werden kann.

Der Träger 25 ist ferner mit Kupplungsstücken 37 versehen, mit denen er mit der Entriegelungsplatte 9 bzw. der Maschine 1 verbunden werden kann. Die Kupplungstücke 37 haben jeweils einen kegelstumpfförmigen Schaft 38 (Fig. 1), der in Richtung auf die Entriegelungsplatte 9 ragt und in eine Schnellwechselspanneinrichtung 3′ eingesetzt werden kann. Die Schnellwechselspanneinrichtungen 3′ sind gleich ausgebildet wie die Schnellwechselspanneinrichtungen 3 für die Werkzeuge 6. Der Schaft 38 weist an seinem dem Träger 25 zugewandten Ende eine stirnseitige Ausnehmung 39 auf, in die ein von einer Schraube 40 durchsetztes Zwischenstück 41 eingreift. Es hat in halber Länge einen Bund 42, dessen Außendurchmesser dem Außendurchmesser des Schaftes 38 entspricht. Das Zwischenstück 41 greift außerdem in eine Vertiefung 43 auf der der Entriegelungsplatte 9 zugewandten Seite des Trägers 25 ein. Die Schraube 40 wird in eine Gewindebohrung 44 des Schaftes 38 geschraubt, die in die stirnseitige Ausnehmung 39 des Schaftes mündet. Die Schraube 40 durchsetzt den Träger 25 und liegt mit ihrem Kopf 45 an der von der Entriegelungsplatte 9 abgewandten Außenseite des Trägers 25 an. In montierter Lage wird der Schaft 38 mit der Schraube 40 fest gegen das Zwischenstück 41 gezogen, das mit seinem Bund 42 durch die Schraube gegen die Trägeraußenseite gezogen wird. Der Durchmesser der Ausnehmung 39 des Trägers 25 entspricht dem Durchmesser des Zwischenstückes 41. Damit der Schaft 28 und das Zwischenstück 41 einwandfrei befestigt werden können, hat das Zwischenstück in montierter Lage axialen Abstand vom Boden der Ausnehmung 39 des Schaftes 38 und vom Boden der Vertiefung 43 im Träger 25.

Die Schnellwechselspanneinrichtungen 3' haben ebenfalls den Verriegelungsring 8', der zum Einsetzen bzw. Freigeben des Schaftes 38 gegen Federkraft zurückgezogen wird. Die Schnellwechselspanneinrichtungen 3' weisen wiederum zwei axial mit Abstand benachbart nebeneinanderliegende Kugelsätze auf, die in der Verriegelungsstellung des Verriegelungsringes 8' in entsprechende Ausnehmungen bzw. Vertiefungen im Schaft 38 gedrückt werden und so den Schaft in der Schnellwechselspanneinrichtung 3' verriegeln. Beim Zurückziehen der Verriegelungsringe 3' können die Kugeln der beiden Kugelsätze radial nach außen ausweichen, wenn der Schaft 38 eingesetzt bzw. herausgezogen wird. Die Schnellwechselspanneinrichtungen 3' sind über Verbindungsstücke 46 an der Vielspindelwerkzeugmaschine 1 befestigt. Die Verbindungsstücke 46 sind vorzugsweise lösbar an der Maschine 1 angeordnet, damit sie bei Bedarf einfach gelöst werden können. Auch die Schnellwechselspanneinrichtungen 3' sind vorzugsweise lösbar mit den Verbindungsstücken 46 verbunden. Sie liegen mit radialem Spiel teilweise innerhalb von Ausnehmungen 47 in der Entriegelungsplatte 9. Zur formschlüssigen Verbindung mit der Entriegelungsplatte 9 sind Formschlußglieder 48 vorgesehen, die im Ausführungsbeispiel entsprechend Fig. 3 jeweils etwa halbkreisförmig ausgebildet sind und in eine Ringnut 49 der Verriegelungsringe 8' eingreifen. Die Formschlußglieder 48 sind ebenso wie die Formschlußglieder 20, 20' der Schnellwechselspanneinrichtungen 3 für die Werkzeuge 6 flach ausgebildet und vorzugsweise lösbar auf der dem Träger 25 zugewandten Außenseite der Entriegelungsplatte 9 befestigt.

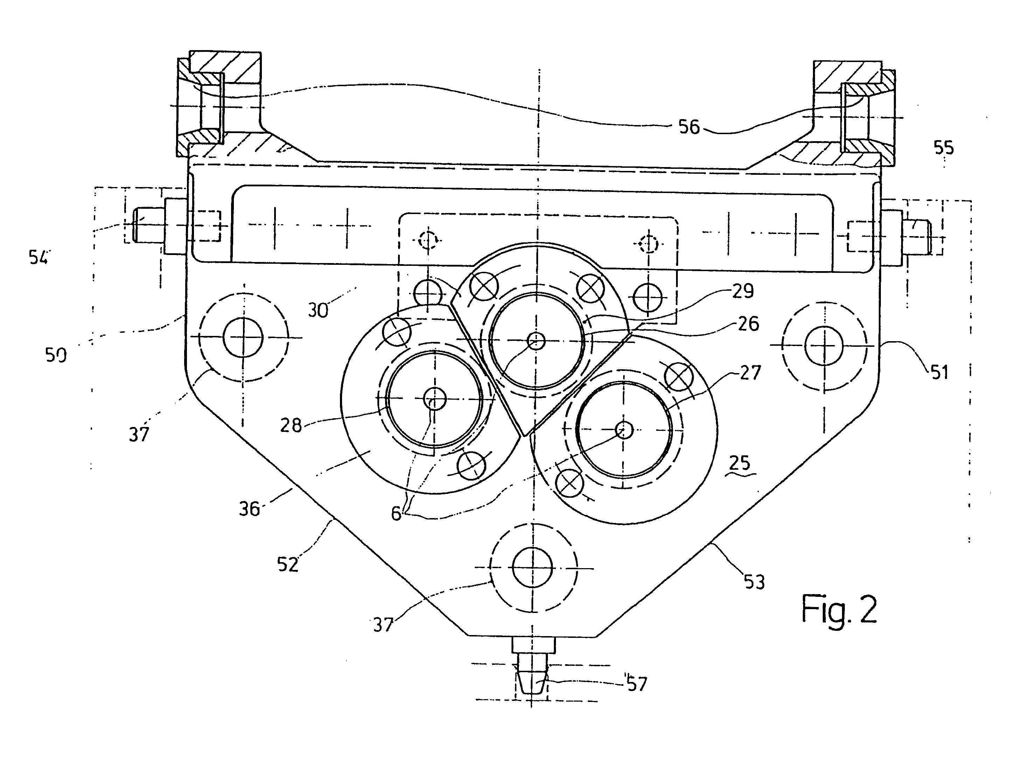

Wie Fig. 2 zeigt, hat der Träger 25 etwa Fünfeckform. Er hat zwei zueinander parallele Außenseiten 50, 51, die in in Richtung zueinander konvergierende Außenseiten 52 und 53 übergehen. Die Werkzeuge 6 sind in der unteren Hälfte des Trägers 25 gehalten, können aber je nach Anordnung der Arbeitsspindeln 2 an der Maschine 1 auch auf andere Weise am Träger angeordnet sein. Damit der Träger 25 mit den Werkzeugen 6 einfach transportiert werden kann, ist er an den beiden Außenseiten mit Anschlüssen 56 für die Greifeinrichtung eines nicht dargestellten Flächenladers versehen, der vorzugsweise ein Portallader ist. Ferner sind am oberen Ende des Trägers 25 Bolzen 54, 55 und am unteren Rand ein vorstehender Bolzen 57 vorgesehen, mit denen der Träger 25 in Ausnehmungen eines ebenfalls nicht dargestellten Speicherplatzes oder dgl. abgesetzt werden kann.

Die Entriegelungsplatte 9 hat gem. Fig. 3 ebenfalls etwa Fünfeckform. Die Schnellwechselspanneinrichtungen 3' für die Kupplungsstücke 37 des Trägers 25 sind an den beiden oberen Ecken und an der unteren Ecke der Entriegelungsplatte 9 vorgesehen. Die Öffnungen 12 für den Durchtritt der Kolbenstangen 11 liegen im Bereich unterhalb der beiden oberen Schnellwechselspanneinrichtungen 3' derart, daß die Achsen der Schnellwechselspanneinrichtungen 3' und der Kolbenstangen jeweils in gemeinsamen Ebenen liegen. Die Schnellwechselspanneinrichtungen 3 für die Werkzeuge 6 befinden sich im Bereich zwischen den Kolbenstangen 11 und der unteren Schnellwechselspanneinrichtung 3'. Je nach Anordnung der Arbeitsspindeln 2 an der Maschine 1 können die Schnellwechselspanneinrichtungen und die Kolbenstangen 11 auch in anderer Weise verteilt und der Entriegelungsplatte 9 vorgesehen sein.

Die Schäfte 5 der Werkzeuge 6 sind in bekannter Weise Bestandteil von Schnellwechseleinsätzen 58, in denen die Werkzeuge 6 in bekannter Weise mittels Stellhülsen, Spannzangen und dgl. befestigt sind.

Soll der Träger 25 mit den Werkzeugen 6 ausgewechselt werden, wird mit dem Flächenlader der Träger 25 erfaßt. Anschließend werden die Kolben-Zylinder-Einheiten 10 beaufschlagt und die Kolbenstangen 11 eingefahren. Die Entriegelungsplatte 9 wird hierbei mitgenommen, wobei über die Formschlußglieder 20, 20', 48 die Verriegelungsringe 8, 8' der Schnellwechselspanneinrichtungen 3, 3' gegen Federkraft in ihre Freigabestellung zurückgezogen werden. Dadurch werden die Schäfte 5 der Schnellwechseleinsätze 58 der Werkzeuge 6 und die Schäfte 38 der Kupplungsstücke 37 des Trägers 25 freigegeben. Mit dem Flächenlader kann nunmehr der Träger 25 axial verfahren werden, bis die Schäfte 5, 38 aus den Schnellwechselspanneinrichtungen 3, 3' herausgezogen sind. Mit dem Flächenlader kann dann der Träger 25 zu einem Werkzeugmagazin transportiert werden. Dort wird der Träger 25 abgelegt, ein neuer Träger 25 ergriffen und zur Maschine 1 transportiert. Dort wird der Träger mit den darin befindlichen Werkzeugen 6 so waagerecht an die noch in ihrer zurückgezogenen Lage befindliche Entriegelungsplatte 9 herangeführt, daß die Schäfte 5, 38 in die Schnellwechselspanneinrichtungen 3, 3' gelangen. Sobald die Endlage erreicht ist, werden die Kolbenstangen 11 ausgefahren und die Entriegelungsplatte 9 in ihre Ausgangslage zurückgeschoben. Die Verriegelungsringe 8, 8' werden unter Federkraft in ihre Verriegelungsstellung zurückgeschoben, in der die Kugelsätze in die Schäfte 5 und 38 einkuppeln. Der Flächenlader wird dann vom Träger 25 entfernt und weggefahren. Unterschiedliche Verdrehlagen zwischen den Schäften 5, 38 und den Schnellwechselspanneinrichtungen 3, 3' wirken sich nicht störend aus, weil beim Einkuppeln der eine Kugelsatz zunächst die Schäfte 5, 38 in axialer Richtung arretiert, während der andere Kugelsatz für die Drehmomentübertragung noch nicht in Eingriff mit den Schäften ist. Sobald jedoch die Arbeitsspindeln 2 drehen, verdrehen sich die Schnellwechselspanneinrichtungen 3 infolge ihrer Trägheit geringfügig gegenüber dem Schaft, so daß die Kugeln für die Drehmomentübertragung einrasten können.

Mit der Entriegelungsplatte 9 werden alle Verriegelungsringe 8, 8' der Schnellwechselspanneinrichtungen 3, 3' gemeinsam und gleichzeitig betätigt, so daß die Schnellwechselspanneinrichtungen 3, 3' zwangsweise geöffnet werden. Die Verriegelungsringe 8, 8' werden durch die entsprechenden Druckfedern in den Schnellwechselspanneinrichtungen 3, 3' in ihre Verriegelungslage zurückgeschoben. Die Schnellwechseleinsätze 58 der Werkzeuge 6 sind im Träger 25 mit entsprechendem radialem und axialem Spiel so aufgenommen, daß sie sich in gekuppeltem Zustand frei im Träger 25 bewegen können und in entkuppeltem Zustand im Träger gehalten werden. Er hat somit die Funktion einer Werkzeugkassette. Der Träger kann mit den Schnellwechselspanneinrichtungen 3' und den Kupplungstücken 37 lagegenau an der Maschine befestigt werden. Da die Verriegelungsringe 8, 8' der Schnellwechselspanneinrichtungen 3 und 3' mit der Entriegelungsplatte 9 gleichzeitig betätigt werden, wird der Träger 25 zusammen mit den Werkzeugen 6 befestigt. Der Flächenlader ist vorzugsweise als Doppelgreifer ausgebildet, mit dem es möglich ist, zunächst den einen Träger 25 mit den Werkzeugen von der Maschine abzunehmen und unmittelbar anschließend mit dem anderen Greifer einen neuen Träger an der Maschine zu befestigen. Dadurch läßt sich die Wechselzeit auf ein Minimum verkürzen.

Bei einer anderen, nicht dargestellten Ausführungsform hat der Träger 25 anstelle der Kupplungsstücke 37 Zentrierzapfen, die in Zentrieröffnungen in der Maschine und/oder der Entriegelungsplatte 9 eingreifen.

Bei der Werkzeugwechselvorrichtung verbleibt der Träger 25 mit den Werkzeugen 6 an der Maschine, wobei die Werkzeuge mit Spiel im Träger angeordnet sind, so daß sie während des Arbeitsvorganges keine Berührung mit dem Träger haben. Zum Auswechseln der Werkzeuge 6 werden mit dem Entriegelungsglied 9 gleichzeitig sämtliche Verriegelungselemente 8 der Spanneinrichtung 3 in ihre Freigabestellung verstellt, so daß die Werkzeuge 6 frei sind. Der Träger 25 mit den Werkzeugen 6 muß dann lediglich von der Maschine weggenommen und ein neuer Träger 25 mit den einzuwechselnden Werkzeugen eingesetzt werden. Das Entriegelungsglied 9 muß dann nur noch zurückgestellt werden, so daß die Verriegelungselemente 8 in ihre Verriegelungsstellung gelangen und die neuen Werkzeuge in den Spanneinrichtungen 3 einspannen. Dieser Wechselvorgang erfordert nur kurze Zeit, so daß die Ausfallzeiten durch Einwechseln von Werkzeugen 6 äußerst gering sind. Die Anlage, innerhalb der die Vielspindelwerkzeugmaschine mit der Werkzeugwechseleinrichtung steht, hat dadurch nur sehr geringe Ausfallzeiten. Da der Träger 25 mit den Werkzeugen 6 an der Maschine verbleibt und die Werkzeuge nicht vom Träger abgezogen werden müssen, können die Werkzeuge völlig unterschiedlich ausgebildet sein. Insbesondere kann der Durchmesser der Werkzeuge 6 größer sein als der Durchmesser der Werkzeugaufnahmen im Träger. Zum Auswechseln des Trägers 25 mit den Werkzeugen ist keine aufwendige Vorrichtung notwendig ; der Träger kann beispielsweise mit Flächenladern von der Maschine abgenommen und an die Maschine angesetzt werden.

## Ansprüche

1. Werkzeugwechselvorrichtung für eine Vielspindelwerkzeugmaschine, die wenigstens zwei Spindeln (2) aufweist, mit einem an der Maschine befestigbaren Träger (25), in dem Werkzeuge gehalten sind, die mit Spanneinrichtungen (3) verbindbar sind, die ein in eine Freigabestellung und in eine Verriegelungsstellung verstellbares Verriegelungselement (8) aufweisen, dadurch gekennzeichnet, daß die Spanneinrichtungen (3) an den Spindeln (2) vorgesehen sind, daß die Verriegelungselemente (8) der Spanneinrichtungen (3) durch ein gemeinsames Entriegelungsglied (9) in ihre Freigabestellung verstellbar sind, das in eine die Verriegelungselemente (8) freigebende Lage verstellbar ist, in der die Verriegelungselemente (8) in ihre Verriegelungsstellung zurückführbar sind, und daß der Träger (25) für die Werkzeuge (6) an der Maschine (1) derart befestigbar ist, daß die in die Spanneinrichtungen (3) eingespannten Werkzeuge (6) berührungslos im Träger (25) angeordnet sind.

2. Vorrichtung nach Anspruch 1, dadurch gekennzeichnet, daß die Verriegelungselemente (8) axial verschiebbare hülsenförmige Verriegelungsringe sind, die formschlüssig mit dem Entriegelungsglied (9) verbunden sind.

3. Vorrichtung nach Anspruch 1 oder 2, dadurch gekennzeichnet, daß das Entriegelungsglied (9) axial in bezug auf die Spanneinrichtungen (3) verschiebbar ist.

4. Vorrichtung nach einem der Ansprüche 1 bis 3, dadurch gekennzeichnet, daß das Entriegelungsglied (9) mit Kolben-Zylinder-Einheiten (10) der Maschine (1) verstellbar ist, von deren Kolbenstangen (11) das Entriegelungsglied (9) getragen ist.

5. Vorrichtung nach einem der Anprüche 1 bis 4, dadurch gekennzeichnet, daß das Entriegelungsglied (9) eine Platte ist, die Öffnungen (24) für den Durchtritt der Spanneinrichtungen (3) aufweist.

6. Vorrichtung nach einem der Ansprüche 1 bis 5, bei der der Träger Kupplungsstücke aufweist, mit denen er an die Maschine ankuppelbar ist, dadurch gekennzeichnet, daß die Maschine (1) für die Kupplungsstücke (37) insbesondere durch Öffnungen (47) im Entriegelungsglied (9) ragende zusätzliche Spanneinrichtungen (3') aufweist, die vorzugsweise jeweils ein Verriegelungselement (8') aufweisen, das aus einer Verriegelungs- in eine Freigabestellung verstellbar ist.

7. Vorrichtung nach Anspruch 6, dadurch gekennzeichnet, daß das Verriegelungselement (8') mit dem Entriegelungsglied (9) verbunden ist.

8. Vorrichtung nach Anspruch 6 oder 7, dadurch gekennzeichnet, daß die Kupplungsstücke (37) jeweils einen gegen die zusätzlichen Spanneinrichtungen (3') ragenden Schaft (38) aufweisen, der in der Spanneinrichtung (3') verriegelbar ist.

9. Vorrichtung nach einem der Ansprüche 1 bis 8, dadurch gekennzeichnet, daß die Spanneinrichtungen (3, 3') für die Werkzeuge (6) und den Träger (25) gleichzeitig durch das Entriegelungsglied (9) entriegelbar sind.

10. Vorrichtung nach einem der Ansprüche 1 bis 9, dadurch gekennzeichnet, daß der Träger (25) Anschlüsse (56) für die Greifeinrichtung einer Transporteinrichtung, vorzugsweise eines Flächenladers, aufweist.

## Claims

1. Tool changing apparatus for a multi-spindle machine tool, which comprises at least two spindles (2), with a holder (25) able to be attached to the machine, in which tools are held, which can be connected to chucking devices (3), which comprise a locking member (8) adjustable into a released position and a locking position, characterised in that the chucking devices (3) are provided on the spindles (2), that the locking members (8) of the chucking devices (3) can be adjusted into their released position by a common unlocking member (9), which is adjustable into a position releasing the locking members (8), in which the locking members (8) can be guided back into their locking position, and that the holder (25) for the tools (6) can be attached to the machine (1) so that the tools (6) clamped in the chucking devices (3) are arranged without contact in the holder (25).

2. Apparatus according to Claim 1, characterised in that the locking members (8) are axially displaceable, socket-like locking rings, which are connected positively to the unlocking member (9).

3. Apparatus according to Claim 1 or 2, characterised in that the unlocking member (9) is able to move axially with respect to the chucking devices (3).

4. Apparatus according to one of Claims 1 to 3, characterised in that the unlocking member (9) is adjustable by piston-cylinder units (10) of the machine (1), whereof the piston rods (11) support the unlocking member (9).

5. Apparatus according to one of Claims 1 to 4, characterised in that the unlocking member (9) is a plate, which comprises openings (24) for the passage of the chucking devices (3).

6. Apparatus according to one of Claims 1 to 5, in which the holder comprises coupling members, by which it can be coupled to the machine, characterised in that for the coupling members (37), the machine (1) comprises additional chucking devices (3') projecting in particular through openings (47) in the unlocking member (9), which chucking devices (3') preferably each comprise a locking member (8'), which can be adjusted from a locking position into a released position.

7. Apparatus according to Claim 6, characterised in that the locking member (8') is connected to the unlocking member (9).

8. Apparatus according to Claim 6 or 7, characterised in that the coupling members (37) each comprise a shaft (38) projecting towards the additional chucking devices (3'), which shaft can be locked in the chucking device (3').

9. Apparatus according to one of Claims 1 to 8, characterised in that the chucking devices (3, 3') for the tools (6) and the holder (25) can be unlocked simultaneously by the unlocking member (9).

10. Apparatus according to one of Claims 1 to 9, characterised in that the holder (25) comprises connections (56) for the gripping device of a conveying device, preferably of a flat loader.

## Revendications

1. Dispositif de changement d'outils pour une machine-outil multibroche avec au moins deux broches (2), comprenant un support (25) qui peut être fixé sur la machine et dans lequel sont maintenus les outils lesquels peuvent être couplés avec des dispositifs de serrage (3) munis d'un élément de verrouillage (8) qui peut être amené dans une position de libération et dans une position de verrouillage, **caractérisé en ce que** les dispositifs de serrage (3) sont prévus sur les broches (2) ; que les éléments de verrouillage (8) des dispositifs de serrage (3) peuvent être amenés dans leur position de libération au moyen d'un organe de déverrouillage (9) commun qui peut être déplacé dans une position de libération des éléments de verrouillage (8) à partir de laquelle lesdits éléments de verrouillage (8) peuvent être ramenés dans leur position de verrouillage ; et que le support (25) pour les outils (6) peut être fixé sur la machine (1) de manière que les outils (6) fixés dans les dispositifs de serrage (3) soient disposés sans contact dans le support (25).

2. Dispositif selon la revendication 1, caractérisé en ce que les éléments de verrouillage (8) sont des bagues de verrouillage en forme de douilles déplaçables dans le sens axial et couplées à engagement positif avec l'organe de déverrouillage (9).

3. Dispositif selon l'une des revendications 1 ou 2, caractérisé en ce que l'organe de déverrouillage (9) est déplaçable dans le sens axial par rapport aux dispositifs de serrage (3).

4. Dispositif selon l'une des revendications 1 à 3, caractérisé en ce que l'organe de déverrouillage (9) peut être déplacé au moyen de systèmes de piston-cylindre (10) de la machine (1) dont les tiges de piston (11) portent ledit organe de déverrouillage (9).

5. Dispositif selon l'une des revendications 1 à 4, caractérisé en ce que l'organe de déverrouillage (9) est un plateau muni d'ouvertures (24) pour le passage des dispositifs de serrage (3).

6. Dispositif selon l'une des revendications 1 à 5, dans lequel le support comporte des pièces d'accouplement par lesquelles il peut être accouplé à la machine, caractérisé en ce que la machine (1) comprend pour les pièces d'accouplement (37) des dispositifs de serrage supplémentaires (3') qui traversent notamment des ouvertures (47) ménagées dans l'organe de déverrouillage (9) et comportent de préférence chacun un élément de verrouillage (8') lequel peut être amené d'une position de verrouillage à une position de libération.

7. Dispositif selon la revendication 6, caractérisé en ce que l'élément de verrouillage (8') est couplé avec l'organe de déverrouillage (9).

8. Dispositif selon l'une des revendications 6 ou 7, caractérisé en ce que les pièces d'accouplement (37) comportent chacun une tige (38) qui s'étend en direction des dispositifs de serrage supplémentaires (3') et peut être verrouillée dans ledit dispositif de serrage (3').

9. Dispositif selon l'une des revendications 1 à 8, caractérisé en ce que les dispositifs de serrage (3, 3') pour les outils (6) et le support (25) peuvent être déverrouillés simultanément par l'organe de déverrouillage (9).

10. Dispositif selon l'une des revendications 1 à 9, caractérisé en ce que le support (25) comprend des prises (56) pour le dispositif de préhension d'un dispositif de transport, de préférence d'un chargeur plan.

Fig.1

Fig. 2

EP 0 295 670 B1

Fig. 3